# EUROPEAN PATENT APPLICATION

(11) **EP 1 930 597 A2**
(43) Date of publication of application: **11.06.2008**
(21) Application number: 07076023.6
(22) Date of filing: 26.11.2007
(51) Int. Cl.: F04D 3/02, F03B 3/10, F03B 13/06

(54) **Archimedean screw machine**

(30) Priority: 05.12.2006 BE 200600592
(71) Applicant: Witteveen & Bos Raadgevende Ingenieurs B.V., 7411 SC Deventer (NL)
(72) Inventor: Manshanden, Gerardus Augustinus Maria, 1671 LA Medemblik (NL)
(74) Representative: 't Jong, Bastiaan Jacob

(57) **Abstract**

The invention relates to a device for pumping up a liquid between a low-lying and a high-lying quantity of liquid and for generating energy from a downward liquid flow, which device comprises:
- a gutter arranged between the low-lying and high-lying quantity of liquid;
- a screw arranged in the gutter and formed by at least one helical flange;
- drive means for driving the screw; and
- generator means for generating energy from the rotation of the screw,

wherein the upper end of the gutter is displaceable between a position above the liquid surface of the high-lying quantity of liquid and a position below the liquid surface of the high-lying quantity of liquid.

## Description

The invention relates to a device for pumping up a liquid between a low-lying and a high-lying quantity of liquid and for generating energy from a downward liquid flow, which device comprises:
- a gutter arranged between the low-lying and high-lying quantity of liquid;
- a screw arranged in the gutter and formed by at least one helical flange;
- drive means for driving the screw; and
- generator means for generating energy from the rotation of the screw.

A screw pump is per se known for the purpose of pumping up water. A screw arranged in a gutter here rotates and hereby scoops up and transports a quantity of water to a higher-lying level.

Devices are also known for generating energy from a liquid flow flowing from a higher level to a lower level.

It is usual for the pumping up of liquid and the generating of energy from liquid to take place in two separate devices.

It is now however an object of the invention to provide a device which combines the functions of pumping and the generation of energy from a liquid flow.

This object is achieved with a device according to the preamble which is characterized in that the upper end of the gutter is displaceable between a position above the liquid surface of the high-lying quantity of liquid and a position below the liquid surface of the high-lying quantity of liquid.

When the gutter is now placed with the upper end above the high-lying liquid surface, the gutter and the screw arranged therein can function as a screw pump. When the upper end is placed below the liquid surface of the high-lying quantity of liquid, this high-lying quantity of liquid can flow into the gutter and thus drive the screw arranged therein. Energy can then be generated herefrom by means of a generator.

In an embodiment of the device according to the invention at least one end of the helical flange ends in longitudinal direction in a point. This point ends on the periphery of the screw. Owing to this flange ending in a point the outer end of the flange will slide smoothly into the water and not splash into the water. Fish will hereby not be harmed and considerably less noise will be produced than with a flange not ending in a point.

In a further preferred embodiment the ends of the helical flange on the high-lying side and the low-lying side end in a point, which point ends on the periphery of the screw. A fish-friendly screw is thus provided which carries the fish along unharmed as well as possible during both the pumping and the generation of energy, and which moreover produces less noise than a usual helical flange. In a highly preferred embodiment of the invention the gutter is a tube arranged around the screw. The screw can rotate inside this tube, although the tube can also rotate together with the screw. The advantage of the tube is that the water which is pumped up, or flows downward in order to generate energy, is held within the periphery of the screw and thereby achieves a maximum efficiency. In the case of for instance an open gutter there is the chance of the water flowing laterally out of the gutter when there is too great a liquid flow.

In another embodiment of the device according to the invention the drive means and the generator means are a single motor/generator arranged on the shaft of the screw. A brushless motor can for instance be used for this purpose which, in addition to enabling driving, also has the property of operating as a generator.

The motor/generator can optionally be arranged on the shaft of the screw via a gearbox if the rotation speed of the screw is not optimal for the motor/generator.

In yet another embodiment of the device according to the invention the lower end of the gutter is displaceable between the position above the liquid surface of the low-lying quantity of liquid and a position below the liquid surface of the low-lying quantity of liquid. In the pumping situation the device can thus be set such that the lower end is situated below the liquid surface of the low-lying quantity of liquid, so that the liquid can be drawn in, while the upper end of the device is situated above the liquid surface of the high-lying quantity of liquid.

In the generator position the upper end of the device is carried below the liquid surface of the high-lying quantity of liquid so that the water can flow into the gutter. In this embodiment the lower end of the device is further arranged above the liquid surface of the low-lying quantity of liquid so that the quantity of liquid flowing through the gutter can flow freely out of the gutter and the screw can achieve an optimum rotation speed without being impeded by the low-lying quantity of liquid.

In this embodiment the gutter is preferably arranged tiltably, and the tilting point is arranged centrally in longitudinal direction. The device can hereby be easily displaced between the two positions with relatively little effort, optionally even my hand.

These and other features of the invention are further elucidated on the basis of the accompanying drawings.

Figures 1 and 2 show a first embodiment of the device according to the invention in respectively the pumping position and the generator position.

Figure 3 shows a perspective view with partly broken-away parts of a second embodiment of a device according to the invention.

Figure 4 shows a side view of the device according to figure 3 in the generator position.

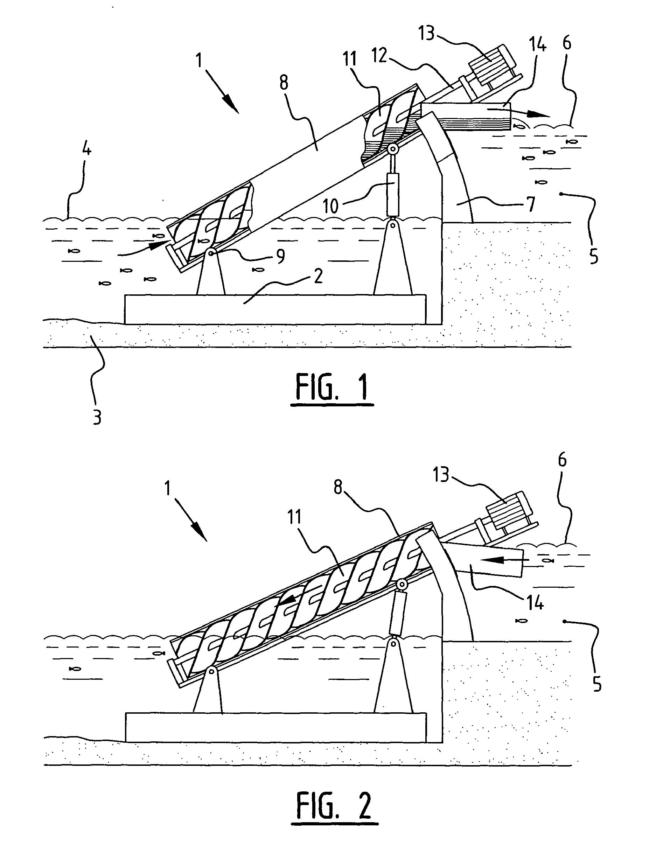

Figure 1 shows a first embodiment of device 1 according to the invention. Device 1 is placed on a baseplate 2 resting on the bed 3 of a pool of water with low-lying water surface 4. In addition, there is provided a canal 5 with a high-lying water surface 6. The canal is bounded by a dam wall 7. The device 1 comprises a tubular gutter 8 which at the bottom is arranged on baseplate 2 for pivoting about pivot point 9. The top side of tube 8 is displaceable between two positions via a hydraulic cylinder 10. A screw 11 with a helical flange is arranged in tube 8. A motor/generator 13 is arranged on shaft 12 of screw 11. The upper end of tube 8 is further provided with a gutter 14.

In figure 1 device 1 is shown in the pumping position, wherein the upper end of tube 8 with gutter 14 is arranged above the water surface 6 of high-lying canal 5. Motor/generator 13 herein serves as drive means, and causes screw 11 to rotate so that water is pumped up from the low-lying part into gutter 14 and eventually enters canal 5.

In figure 2 device 1 is shown in the generator position. The top side of tube 8 is here carried downward so that gutter 14 lies below the water surface 6 of canal 5. The water from canal 5 can now flow into tube 8 and thus drive screw 11. Motor/generator 13 then serves as generator, so that energy can be generated by rotation of screw 11. Because the gutter is embodied as tube 8, all the water flowing out of canal 5 is guided along screw 11 and a maximum efficiency is obtained.

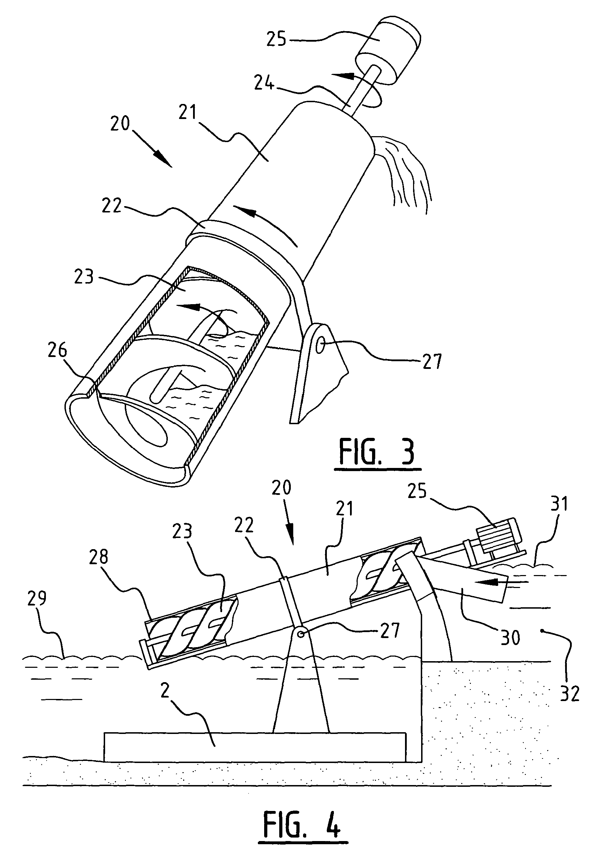

Figure 3 shows a second embodiment 20 of the device according to the invention. This device 20 has a tube 21 which is rotatable in a frame 22. Further arranged in tube 21 is a screw 23 which has a helical flange. A motor/generator 25 is once again arranged on shaft 24 of screw 23.

In this embodiment the screw 23 ends on the bottom side as well as the top side in a point 26 which ends on the periphery of screw 23, and as a result lies against the inner wall of tube 21. Because the outer end ends in a point 26, screw 23 will slide smoothly into the water and not, as in the case of the usual helical screw, splash into the water. This protects fish and the level of noise is limited.

The frame 22 in which tube 21 is rotatably mounted tilts around pivot point 27. As shown in figure 4, the whole device 20 can be tilted via this pivot point 27 such that the low-lying end 28 of tube 21 rises above the water surface 29 of the low-lying water. Gutter 30 is simultaneously carried below the water level 31 of canal 32 so that the water can flow via the gutter into tube 21 and can thus drive screw 23. Because the water can then flow out freely at the low-lying end 28 of tube 21, an optimum energy generation can thus be obtained.

## Claims

1. Device for pumping up a liquid between a low-lying and a high-lying quantity of liquid and for generating energy from a downward liquid flow, which device comprises:
- a gutter arranged between the low-lying and high-lying quantity of liquid;
- a screw arranged in the gutter and formed by at least one helical flange;
- drive means for driving the screw; and
- generator means for generating energy from the rotation of the screw,
**characterized in that**
the upper end of the gutter is displaceable between a position above the liquid surface of the high-lying quantity of liquid and a position below the liquid surface of the high-lying quantity of liquid.

2. Device as claimed in claim 1, wherein at least one end of the helical flange ends in longitudinal direction in a point, which point ends on the periphery of the screw.

3. Device as claimed in claim 2, wherein the ends of the helical flange on the higher-lying side and the lower-lying side end in a point, which point ends on the periphery of the screw.

4. Device as claimed in any of the foregoing claims, wherein the gutter is a tube arranged around the screw.

5. Device as claimed in any of the foregoing claims, wherein the drive means and the generator means are a single motor/generator arranged on the shaft of the screw.

6. Device as claimed in any of the foregoing claims, wherein the lower end of the gutter is displaceable between a position above the liquid surface of the low-lying quantity of liquid and a position below the liquid surface of the low-lying quantity of liquid.

7. Device as claimed in claim 6, wherein the gutter is arranged tiltably, and the tilting point is arranged centrally in longitudinal direction.
